(19) Europäisches Patentamt
European Patent Office
Office européen des brevets

(11) EP 1 231 233 B1

(12) EUROPEAN PATENT SPECIFICATION

(45) Date of publication and mention of the grant of the patent:
**14.01.2004 Bulletin 2004/03**

(51) Int Cl.⁷: **C08G 59/68**, C08G 59/18, C08G 65/10

(21) Application number: **02002047.5**

(22) Date of filing: **08.02.2002**

# (54) Curing composition

Härtungszusammensetzung

Composition de durcissement

(84) Designated Contracting States:
**DE FR GB**

(30) Priority: **08.02.2001 JP 2001031763**
**27.02.2001 JP 2001053204**
**09.03.2001 JP 2001066440**

(43) Date of publication of application:
**14.08.2002 Bulletin 2002/33**

(73) Proprietor: **KANSAI PAINT CO., LTD.**
**Amagasaki-shi, Hyogo-ken 661-8555 (JP)**

(72) Inventor: **Isaka, Hisashi**
**Atsugi-shi, Kanagawa-ken (JP)**

(74) Representative: **Albrecht, Thomas, Dr. et al**
**Kraus & Weisert,**
**Thomas-Wimmer-Ring 15**
**80539 München (DE)**

(56) References cited:
**EP-A- 0 442 635**
**EP-A- 0 493 916**
**US-A- 4 599 401**

Remarks:
The file contains technical information submitted after the application was filed and not included in this specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

The present invention relates to a curing composition which can form a three-dimensionally cross-linked matter having excellent characteristics such as hardness and gloss and which is suited particularly to a coating composition and a method for forming a cured coating film using the above composition.

A curing composition comprising an epoxy group-containing resin and a cationic polymerization catalyst has so far been known, and a coating composition comprising a specific epoxy group-containing resin and a heat latent cationic polymerization catalyst is disclosed in, for example, U.S. Patent No. 6,015,848. However, this composition involves the problems that it is liable to be influenced by humidity, so that the coating environment and the coating steps are restricted to a large extent.

Further, known is a method in which cyclic ethers represented by an epoxy compound are subjected to ring-opening polymerization in a vessel using a Lewis acid and an onium salt as initiators to synthesize polyethers. Various initiators are researched in this polyether synthesis field, and disclosed in, for example, WO94/09055 is a method in which cyclic ethers are subjected to ring-opening polymerization using a perfluoroalkylsulfonic acid metal salt such as metal triflate to synthesize linear polyethers.

Further, it is described in U.S. Patent No. 3,842,019 and Polymer, Vol. 41, p. 8465 to 8474, 2000 that a cured matter is obtained by combining a multifunctional epoxy compound with metal triflate.

On the other hand, when a curing composition is an organic solvent diluting type, involved therein is a problem on global environmental protection caused by volatilization of organic solvents, and therefore a water diluting type curing composition which is suited to global environmental protection is required to be developed.

An object of the present invention is to provide a curing composition which is less liable to be influenced by coating environment and coating conditions and is excellent in a curing property at a relatively low curing temperature without using a lot of a polymerization catalyst and which can form a cured matter excellent in a hardness and physical and chemical performances.

Another object of the present invention is to provide a method for forming a coating film which is less liable to be influenced by coating environment and coating conditions in a wet-on-wet coating step capable of shortening working steps and can provide a cured coating film excellent in a curing property at a relatively low curing temperature without using a lot of a polymerization catalyst and excellent in a hardness and a finish.

The other objects and the characteristics of the present invention shall be apparent from the following descriptions.

Intensive researches repeated by the present inventors in order to achieve the objects described above have resulted in finding that a curing composition having an excellent curing property can be obtained by using a specific metal triflate which is a kind of a Lewis acid as a cationic polymerization catalyst for a polymerizable cyclic structure-containing component, and they have come to complete the present invention.

Thus, the present invention provides a curing composition comprising:

(A) a polymerizable cyclic structure-containing component comprising
  a compound (a-1) having at least two polymerizable cyclic ether structures in a molecule and, if necessary,
  a compound (a-2) having one polymerizable cyclic structure in a molecule, and
(B) 0.01 to 5 parts by weight per 100 parts by weight of the above component (A), of a metal triflate,
(C) water,

wherein the above polymerizable cyclic structure-containing component (A) has an average polymerizable cyclic structure equivalent (number average molecular weight/number of polymerizable cyclic structure in a molecule) falling in a range of 100 to 1000, and the metal triflate (B) is a triflate of metal selected from scandium, yttrium, lanthanoid series metals, actinoid series metals, magnesium and zinc.

Also, the present invention provides a method for forming a cured coating film in which the curing composition described above is applied on a base material and cured by heating.

Further, the present invention provides a method for forming a cured coating film in which the curing composition described above is applied on an uncured thermosetting colored layer and then cured by heating.

The water-containing curing composition and the method for forming a cured coating film according to the present invention shall be explained below.

The curing composition of the present invention comprises the polymerizable cyclic structure-containing component (A) and the metal triflate (B) each described below as essential components.

### Polymerizable cyclic structure-containing component (A)

The polymerizable cyclic structure-containing component (A) used for the composition of the present invention

comprises the compound (a-1) having at least two polymerizable cyclic ether structures in a molecule or the mixture of the above compound (a-1) and the compound (a-2) having one polymerizable cyclic structure in a molecule.

The polymerizable cyclic ether structure in the compound (a-1) described above is a cyclic structure having an ether bond (C-O-C) in which one oxygen is present between adjacent two carbons in a carbon-carbon bond constituting the ring, and a carbon-oxygen bond in the above structural part is cleaved to form a linear ether structure. A ring having such polymerizable cyclic ether structure includes, for example, rings having one ether bond in a ring, such as an oxirane ring, an oxetane ring, an oxolane ring and an oxepane ring; rings having two ether bonds in a ring, such as 1,3-dioxolane; and rings having three ether bonds in a ring, such as 1,3,5-trioxane.

The compound (a-1) used for the component (A) has at least two polymerizable cyclic ether structure parts in a molecule. In this case, two or more rings described above may be the same as or different from each other.

The compound (a-1) has preferably a number average molecular weight falling in a range of usually 140 to 50,000, particularly 160 to 30,000 and further particularly 160 to 20,000. Further, the number of the polymerizable cyclic ether structure parts contained in the compound (a-1) shall not strictly be restricted as long as at least two parts are present in a molecule. Capable of being suitably used as the compound (a-1) is a compound in which a polymerizable cyclic structure equivalent (number average molecular weight/number of polymerizable cyclic structure in a molecule) falls in a range of 70 to 3,000, particularly 80 to 2,000 and further particularly 80 to 1,500.

In the present invention, particularly suited is the composition having an oxirane ring and/or an oxetane ring as the compound (a-1).

Among the compounds (a-1), capable of being given as the compound having an oxirane ring are, for example, compounds having two or more epoxy groups such as dicyclopentadiene dioxide, (3,4-epoxycyclohexyl)methyl-3,4-epoxycyclohexanecarboxylate, bis(2,3-epoxycyclopentyl) ether, bis(3,4-epoxycyclohexylmethyl) adipate, bis (3,4-epoxy-6-methylcyclohexylmethyl) adipate, (3,4-epoxy-6-methylcyclohexyl)methyl-3,4-epoxy-6-methylcyclohexanecarboxylate, bis(3,4-epoxycyclohexylmethyl) acetal, bis(3,4-epoxycyclohexyl) ether of ethylene glycol, bis (3,4-epoxycyclohexylmethyl) ether of ethylene glycol, 3,4-epoxycyclohexanecarboxylic acid diester of ethylene glycol, 2-(3,4-epoxycyclohexyl-5,5-spiro-3,4-epoxy)cyclohexane-meta-dioxane, Celoxide 2080 (trade name, difunctional epoxy resin, manufactured by Daicel Chemical Industries, Ltd.), Epolead GT300 (trade name, trifunctional alicyclic epoxy resin, manufactured by Daicel Chemical Industries, Ltd.), Epolead GT400 (trade name, tetrafunctional alicyclic epoxy resin, manufactured by Daicel Chemical Industries, Ltd.), Celoxide 3000 (trade name, difunctional epoxy compound, manufactured by Daicel Chemical Industries, Ltd.), EHPE (trade name, multifunctional epoxy resin, manufactured by Daicel Chemical Industries, Ltd.), compounds represented by the following formulas (1), (2), (3) and (4):

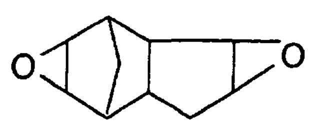

(1)

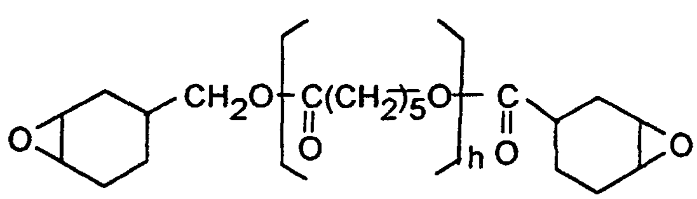

(2)

(h is an integer of 1 or more, preferably 1 to 10)

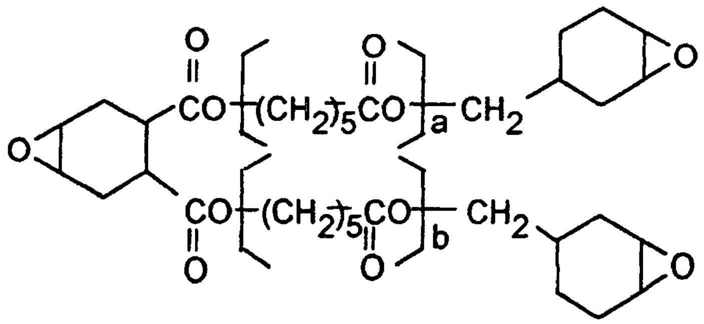

(3)

(a and b each are an integer of 0 or more, preferably 0 to 10)

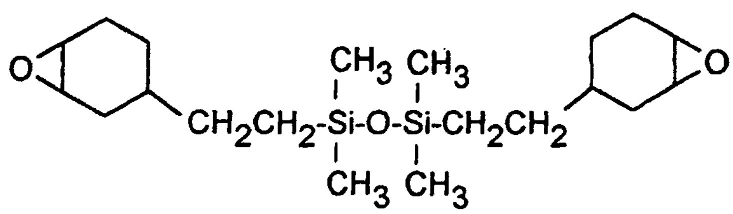

(4)

ethylene glycol diglycidyl ether, propylene glycol diglycidyl ether, polyethylene glycol diglycidyl ether, polypropylene glycol diglycidyl ether, 1,4-butanediol diglycidyl ether, neopentyl glycol diglycidyl ether, 1,6-hexanediol diglycidyl ether, glycerin diglycidyl ether, polyglycerin polyglycidyl ether, trimethylolpropane polyglycidyl ether, pentaerythritol polyglycidyl ether, spiro glycol diglycidyl ether, 2,6-diglycidyl phenyl ether, sorbitol polyglycidyl ether, triglycidyl isocyanurate, bisphenol A diglycidyl ether, butadiene dioxide, diglycidyl phthalate, diglycidyl tetrahydrophthalate, vinylcyclohexene dioxide, limonene dioxide, bisphenol A epoxy resins, cresol novolak epoxy resins and epoxyphenol novolak resins; homopolymers of epoxy group-containing polymerizable unsaturated monomers such as glycidyl (meth)acrylate, methylglycidyl (meth)acrylate, allyl glycidyl ether, 3,4-epoxycyclohexylmethyl (meth)acrylate, caprolactone-modified compounds of 3,4-epoxycyclohexylmethyl (meth)acrylate and 3,4-epoxyvinylcyclohexane, and copolymers of the above epoxy group-containing polymerizable unsaturated monomers with other copolymerizable monomers.

Among these oxirane ring-containing compounds, the particularly suited compounds include (3,4-epoxycyclohexyl)methyl-3,4-epoxycyclohexanecarboxylate, bis(3,4-epoxycyclohexylmethyl) adipate, bis(3,4-epoxycyclohexylmethyl) ether of ethylene glycol, Epolead GT300, Epolead GT400, the compounds represented by Formula (2) described above and the homopolymers or copolymers of 3,4-epoxycyclohexylmethyl (meth)acrylate or the caprolactone-modified compound of the above (meth)acrylate.

Among the compounds (a-1), capable of being given as the compound having an oxetane ring is, for example, a compound represented by the following formula (5):

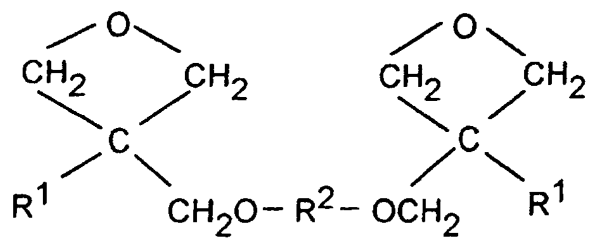

(5)

wherein two $R^1$'s may be the same or different and represent a hydrogen atom or an alkyl group having 1 to 4 carbon atoms; and $R^2$ represents an alkylene group having 1 to 6 carbon atoms, a cycloalkylene group having 4 to 7 carbon

atoms, a phenylene group, a xylylene group, a hydrogenated xylylene group or a polyalkyleneoxy group having 4 to 30 carbon atoms.

Among the compounds (a-1), capable of being given as the compound having both oxirane ring and oxetane ring are, for example, 3-ethyl-3-(3,4-epoxycyclohexylmethyl)oxymethyloxetane and 3-ethyl-3-glycidyloxymethyloxetane.

Among them, the oxirane compounds having 2 to 50 alicyclic oxirane rings in a molecule are particularly suited as the compound (a-1) from the viewpoint of a curing property of the curing composition and a hardness of the cured matter such as a coating film formed using the same.

The polymerizable cyclic structure-containing component (A) in the present invention can comprise substantially only at least one of the compounds (a-1) described above, but if necessary, it may further comprise the compound (a-2) having one polymerizable cyclic structure in a molecule in addition to the compound (a-1). In this respect, the "polymerizable cyclic structure" is a three membered or more-ring structure which comprises a hetero atom (for example, a nitrogen, oxygen or sulfur atom) and which can be subjected to ring-opening polymerization by cationic polymerization.

The rings having such polymerizable cyclic structure include, for example, rings having a cyclic ether structure, such as an oxirane ring, an oxetane ring, an oxolane ring and an oxepane ring; rings (lactone ring) having a cyclic ester structure; rings (lactam ring) having a cyclic amide structure; and rings having a cyclic iminoether structure.

The compound (a-2) can have only one ring described above in a molecule, and capable of being suitably used is the compound having a number average molecular weight, that is, a polymerizable cyclic structure equivalent (number average molecular weight/number of polymerizable cyclic structure in a molecule) falling in a range of usually 70 to 1000, particularly 80 to 750 and further preferably 80 to 500.

Among the compounds (a-2), capable of being given as the compound having a ring having a cyclic ether structure are, for example, oxiranes such as glicidol, styrene oxide, alkyl monoepoxide, phenyl glycidyl ether, alkyl monoglycidyl ether, Cardura E10 (manufactured by Shell Oil Company, glycidyl ester of branched higher alkanoic acid), Glydex N10 (trade name, manufactured by Exxon Co., Ltd.), alkyl glycidyl esters including Araldite PT910 (trade name, manufactured by Ciba-Geigy Co., Ltd.), glycidyl (meth)acrylate, methylglycidyl (meth)acrylate, allyl glycidyl ether, 3,4-epoxycyclohexylmethyl (meth)acrylate, caprolactone-modified products of 3,4-epoxycyclohexylmethyl (meth)acrylate, 3,4-epoxyvinylcyclohexane, cyclohexene oxide, α-pinene oxide, (3,4-epoxycyclohexyl)methyl alcohol, (3,4-epoxycyclohexyl)ethyltrimethoxysilane and compounds represented by the following formula (6):

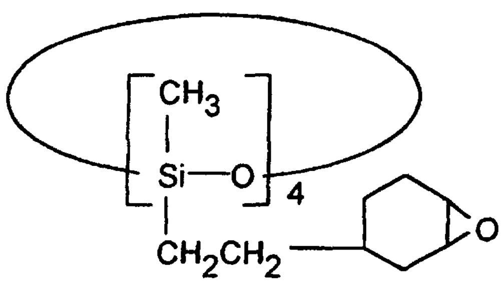

(6)

oxetanes such as 3-ethyl-3-methoxymethyloxetane, 3-ethyl-3-ethoxymethyloxetane, 3-ethyl-3-butoxymethyloxetane, 3-ethyl-3-hexyloxymethyloxetane, 3-methyl-3-hydroxymethyloxetane, 3-ethyl-3-hydroxymethyloxetane, 3-ethyl-3-allyloxymethyloxetane, 3-ethyl-3-(2'-hydroxyethyl)oxymethyloxetane, 3-ethyl-3-(2'-hydroxy-3'-phenoxypropyl)oxymethyloxetane, 3-ethyl-3-(2'-hydroxy-3'-butoxypropyl)oxymethyloxetane, 3-ethyl-3-(2'-butoxyethyl)oxymethyloxetane, 3-ethyl-3-benzyloxymethyl-oxetane, 3-ethyl-3-(p-tert-butylbenzyloxymethyl)oxetane, 3-ethyl-3-methacryloyloxymethyloxetane and 3-ethyl-3-acryloyloxymethyloxetane; oxolanes such as tetrahydrofuran and tetrahydrofurfuryl alcohol; oxepanes such as oxepane; dioxoranes such as 1,3-dioxorane and trioxoranes such as 1,3,5-trioxorane.

The compound having a ring (lactone ring) having a cyclic ester structure includes, for example, β-propiolactone, γ-butyrolactone, δ-valerolactone, ε-caprolactone, enanthlactone, 3-methyl-β-propiolactone, 3-methyl-γ-butyrolactone, 3-methyl-δ-valerolactone, 3-methyl-ε-caprolactone, 4-methyl-ε-caprolactone and 3,3,5-trimethyl-ε-caprolactone.

The compound having a ring (lactam ring) having a cyclic amide structure includes, for example, azetidinone, pyrrolidone and ε-caprolactam.

The compound having a ring having a cyclic iminoether structure includes, for example, oxazoline and oxazine.

These compounds having a polymerizable cyclic structure can be used alone or in combination of two or more

kinds thereof.

Among them, particularly suited as the compound (a-2) are oxiranes, oxetanes, oxolanes and lactones.

The polymerizable cyclic structure-containing component (A) comprising the compound (a-1) or the mixture of the compound (a-1) and the compound (a-2) each described above has an average polymerizable cyclic structure equivalent (number average molecular weight/number of polymerizable cyclic structure in a molecule) falling in a range of 100 to 1000, particularly 120 to 700 and further particularly 120 to 500. In this respect, the "average polymerizable cyclic structure equivalent" (E) is a value calculated from the following equation:

$$E = (E_1 \times f_1) + (E_2 \times f_2)$$

wherein $E_1$ represents the polymerizable cyclic structure equivalent of the compound (a-1), and $f_1$ represents a weight ratio thereof in the component (A); $E_2$ represents the polymerizable cyclic structure equivalent of the compound (a-2), and $f_2$ represents a weight ratio thereof in the component (A).

The blending proportions of the compound (a-1) and the compound (a-2) in the polymerizable cyclic structure-containing component (A) shall not strictly be restricted and can be changed over a wide range according to the uses of the finished curing composition. In general, it is preferred from the viewpoint of a curing property of the curing composition that the amount of the compound (a-1) falls in a range of 20 to 100 parts by weight, preferably 40 to 100 parts by weight and more preferably 60 to 100 parts by weight and that the amount of the compound (a-2) falls in a range of 0 to 80 parts by weight, preferably 0 to 60 parts by weight and more preferably 0 to 40 parts by weight each per 100 parts by weight of the total of the compound (a-1) and the compound (a-2).

Metal triflate (B)

The metal triflate (B) used for the composition of the present invention is a trifluoromethanesulfonic acid metal salt and functions as a cationic polymerization catalyst for the polymerizable cyclic structure-containing component (A).

As described above, it is known that a polymerizable cyclic structure-containing component can be polymerized and three-dimensionally cross-linked by using a metal triflate as a cationic polymerization catalyst. On the other hand, a metal triflate is known as a Lewis acid which is relatively stable in water, and it is known as well that triflates of metals of particularly the 3A group in the periodic table and specific metals are stable in water (refer to O. Kobayashi, J. Am. Chem. Soc., 120, p. 8287 to 8288, 1998).

On the other side, alkali metal triflate such as lithium triflate is weak in a function as a curing catalyst, and a curing composition obtained by using the same has an unsatisfactory curing property. Further, a curing composition obtained by using silver triflate has the problem that marked coloring is observed in a cured matter formed therefrom due to yellowing.

In the composition of the present invention, a triflate of at least one metal selected from metals of the 3A group in the periodic table, magnesium and zinc is used as the metal triflate (B) from the viewpoint of a curing property, coloring and a pot life of the above composition. The metal of the 3A group in the periodic table includes scandium, yttrium, lanthanoid series metals and actinoid series metals. Among them, zinc triflate is suited as the metal triflate. These metal triflates can be used alone or in combination of two or more kinds thereof.

In the composition of the present invention, the blending amount of the metal triflate (B) falls suitably in a range of 0.01 to 5 parts by weight, particularly 0.02 to 3 parts by weight and further particularly 0.05 to 2 parts by weight per 100 parts by weight of the polymerizable cyclic structure-containing component (A) from the viewpoint of the curing property of the composition and less liability of coloring of the cured matter.

Curing composition

The curing composition of the present invention comprises as essential components, the polymerizable cyclic structure-containing component (A) and the metal triflate (B) each described above and can comprise, if necessary, an organic solvent, water, a reactive diluent, a melamine resin, a pigment, a UV absorber, a surface controller, an antioxidant, a fluidity controller and a wax.

A polyol compound can suitably be used as the reactive diluent described above, and a cross-linking degree and a hardness of the cured matter obtained can be controlled by blending the reactive diluent. Suited as the polyol compound is a compound having a molecular weight falling in a range of about 60 to about 1000, preferably 100 to 600 and a hydroxyl group value falling in a range of 120 to 1000 mg KOH/g, preferably 150 to 800 mg KOH/g. Capable of being given are, for example, adducts of polyhydric alcohols with lactones such as ε-caprolactone, acryl oligomers having two or more hydroxyl groups, polyesterpolyols; and esterification products of dimethylolalkanoic acids having 6 to 8 carbon atoms (for example, 2,2'-dimethylolpropionic acid and 2,2'-dimethylolbutanoic acid) with alkanoic acid

monoglycidyl esters having 8 to 24 carbon atoms (for example, trade name "Cardura E" (glycidyl ester of branched higher alkanoic acid, manufactured by Shell Oil Company)).

Further, a water-based curing composition can be obtained by adding water to the curing composition of the present invention. In such water-based curing composition, the metal triflate (B) is dissolved and present in an aqueous phase and separates from the polymerizable cyclic structure-containing component (A) which forms an oil phase, and therefore both have less chance to be brought into contact with each other in a static state, so that in general, it is notably increased in a storage stability as compared with a curing composition containing no water. However, the above water-based curing composition is heated in curing to volatilize water, and the polymerizable cyclic structure-containing component (A) is readily be brought into contact with the metal triflate (B), whereby the component (A) is advanced in polymerization reaction and cured.

A content of water in the above water-based curing composition shall not specifically be restricted and can be changed according to a blending amount of the metal triflate (B) contained in the composition, and it falls suitably in a range of usually 0.1 to 250 parts by weight, particularly 0.5 to 200 parts by weight and further particularly 1 to 100 parts by weight per 100 parts by weight of the polymerizable cyclic structure-containing component (A).

In the water-based curing composition, the polymerizable cyclic structure-containing component (A) may form an oil phase as it is or in a state that it is dissolved in an organic solvent or may be present in a state that it is dispersed in water. In the latter case, a dispersion aid such as an emulsifier and a suspension stabilizer can be used, if necessary, in order to stably disperse the polymerizable cyclic structure-containing component (A) in water. These emulsifier, dispersant and suspension stabilizer shall not specifically be restricted in a kind thereof and include, for example, emulsifiers, dispersants and suspension stabilizers of an anionic type, a cationic type, a nonionic type, an anionic-nonionic type and a zwitter-ionic type, and those of a nonionic type, an anionic type and an anionic-nonionic type are particularly suited.

The polymerizable cyclic structure-containing component (A) and the metal triflate (B) can be dispersed in water by means of a stirrer making use of shearing at a high speed such as a homogenizer. When the polymerizable cyclic structure-containing component (A) has a high viscosity and is hard to be dispersed, an organic solvent is added to reduce the viscosity and dispersed in water, and then the organic solvent is removed, if necessary, whereby a water-based curing composition can be prepared. A procedure for dispersing in water includes, for example, a method in which the polymerizable cyclic structure-containing component (A) and the metal triflate (B) are added to an aqueous solution of a dispersion aid and dispersed, and a method in which a dispersion aid is blended with the mixture of the polymerizable cyclic structure-containing component (A) and the metal triflate (B) and then water is added to disperse them.

Method for forming a cured coating film

The curing composition of the present invention can be used for preparing various cured matter, and it can advantageously be used particularly for forming a cured coating film by applying on a base material as a coating composition, heating to cure.

The base material to which the curing composition of the present invention can be applied shall not specifically be restricted as long as it has a heat resistance for with standing heating to cure. Further, roll coating, curtain flow coating and spray coating can be given as a coating means therefor.

The above curing composition is usually applied so that the coating film thickness falls in a range of about 2 to about 80 μm, particularly about 3 to about 60 μm in terms of a dried coating film thickness. The coating film is suitably heated and cured at a temperature falling in a range of 50 to 220°C, particularly 70 to 220 °C in terms of a material-reaching temperature for about one to about 30 minutes.

The curing composition of the present invention can be applied on an uncured thermosetting colored layer by wet-on-wet and then baked to cure the colored layer described above and the coating film layer of the curing composition of the present invention at the same time, whereby it can be used for forming a multiple layer coating film.

To be specific, multiple layer coating film can be formed, for example, by a 2-coating 1-baking method in which the curing composition of the present invention is used as a coating composition for forming a clear layer to apply the above curing composition on an uncured thermosetting colored layer (wet-on-wet coating) and bake them, and a 3-coating 1-baking method in which the above curing compositions are applied in order (wet-on-wet coating) for a first colored layer, a second coating layer and a clear layer to bake them at the same time. These methods are merely examples, and the uncured thermosetting colored layer described above regarding the 2-coating 1-baking method and the first colored layer described above regarding the 3-coating 1-baking method shall not be restricted to a coating layer and an ink layer. Further, the colored layer may be formed by carrying out removal of water and a solvent and semi-curing at a pre-heating step usually carried out in a water-based coating material. Further, the uncured thermosetting colored layer may not be cured alone by itself and may be cured by transfer of a curing agent from a layer coated thereon.

When a curing composition is applied on an uncured thermosetting colored layer by wet-on-wet, various

effects are exerted on the layer of the curing composition by a solvent and the like (moisture and basic substances in the case of a water-based color coating composition) contained in the colored layer which is a lower layer, and therefore the kind of a curing composition coated thereon has so far been restricted.

In contrast with this, the curing composition of the present invention shows an excellent curing property regardless of coating environment and coating conditions and therefore has the advantage that it can be applied on an optional uncured thermosetting colored layer. In particular, when a lower layer comprises a water-based color coating composition, a curing composition making use of ionic polymerization is reduced in a curing property to a large extent due to deactivation of a catalyst, so that it has so far been difficult to cure it. In the curing composition of the present invention, however, the curing property is scarcely influenced by an uncured lower layer even when a lower layer comprises a water-based color coating composition.

In a method for forming the multiple layer coating film described above, a substrate on which a cured coating film is formed shall not specifically be restricted, and usually suited are materials such as car bodies, car parts, cans for beverages, parts for home electric appliances and metal sheets. Further, the curing composition of the present invention can be applied on a colored layer, for example, by a method such as roll coating, curtain flow coating and spray coating. When the curing composition is applied, the dried coating film thickness can suitably be selected in a range where the good coating film appearance and curing property are obtained, and it falls usually in a range of about 2 to about 80 μm in terms of a dried coating film thickness. It falls preferably in a range of usually about 2 to about 20 μm when used for coating cans and preferably about 15 to about 80 μm when used for coating car bodies. A temperature for baking the colored layer and the curing composition layer after coating can fall in a range of usually 50 to 220°C, preferably 70 to 220 °C.

The present invention shall further specifically be explained below with reference to examples, but the present invention shall not be restricted only to these examples. "Parts" and "%" are based weight.

**Synthetic Example 1:** synthesis of an oxirane-containing acrylic resin mixed solution (a-1)

A reactor equipped with a stirrer, a condenser, a temperature-controlling device, a nitrogen-introducing tube and a dropping funnel was charged with 650 parts of Celoxide 2021P (trade name, difunctional epoxy compound, epoxy equivalent: about 130, manufactured by Daicel Chemical Industries, Ltd.). The reactor was substituted in an inside thereof with nitrogen and heated and maintained at 165°C. Dropwise added thereto in 4 hours was a mixture comprising 50 parts of styrene, 150 parts of n-butyl acrylate, 75 parts of 2-ethylhexyl acrylate, 75 parts of 2-hydroxyethyl acrylate, 150 parts of glycidyl methacrylate and 50 parts of 2,2'-azobis(2-methylbutyronitrile). After finishing dropwise adding, the solution was aged for 30 minutes, and the mixture of 2.5 parts of 2,2'-azobis(2-methylbutyronitrile) and 25 parts of Celoxide 2021P was further dropwise added thereto in one hour. Then, the solution was aged for 30 minutes, whereby obtained was a mixed solution (a-1) of an acrylic resin and Celoxide 2021P having a non-volatile content of 100 % and a Gardner viscosity (20°C) of $X^+$. The mixed solution (a-1) thus obtained had an average polymerizable cyclic structure equivalent of 276. Further, the acrylic resin contained in the resulting mixed solution (a-1) had a hydroxyl group value of 72 mg KOH/g, a number average molecular weight of 1510 and a weight average molecular weight of 2330.

**Synthetic Example 2:** synthesis of an oxetane-containing acrylic resin mixed solution (a-2)

A reactor equipped with a stirrer, a condenser, a temperature-controlling device, a nitrogen-introducing tube and a dropping funnel was charged with 650 parts of Celoxide 2021P, and the reactor was substituted in an inside thereof with nitrogen and heated and maintained at 165°C. Dropwise added thereto in 4 hours was a mixture comprising 50 parts of styrene, 150 parts of n-butyl acrylate, 75 parts of 2-ethylhexyl acrylate, 75 parts of 2-hydroxyethyl acrylate, 150 parts of 3-ethyl-3-methacryloyloxymethyloxetane and 50 parts of 2,2'-azobis(2-methylbutyronitrile). After finishing dropwise adding, the solution was aged for 30 minutes, and the mixture of 2.5 parts of 2,2'-azobis(2-methylbutyronitrile) and 25 parts of Celoxide 2021P was further dropwise added thereto in one hour. Then, the solution was aged for 30 minutes, whereby obtained was a mixed solution (a-2) of an acrylic resin and Celoxide 2021P having a non-volatile content of 100 % and a Gardner viscosity (20°C) of Y. The mixed solution (a-2) thus obtained had an average polymerizable cyclic structure equivalent of 335. Further, the acrylic resin contained in the resulting mixed solution (a-2) had a hydroxyl group value of 72 mg KOH/g, a number average molecular weight of 1440 and a weight average molecular weight of 2190.

**Synthetic Example 3:** synthesis of a hydroxyl group-containing compound (reactive diluent) (b)

A reactor equipped with a stirrer, a condenser, a temperature-controlling device, a nitrogen-introducing tube and a dropping funnel was charged with 296 parts of dimethylolbutanoic acid, and the reactor was substituted in an

inside thereof with nitrogen and heated at 120°C. Dropwise added thereto in 2 hours was 490 parts of "Cardura E10" (glycidyl ester of branched higher alkanoic acid, manufactured by Shell Oil Company), and the temperature was maintained at 120°C. When the acid value became 9 or less, the solution was cooled down to terminate the reaction. The resulting hydroxyl group-containing compound had a solid content of about 98 % and a Gardner viscosity (20°C) of $Z_6Z_7$, and the solid matter had a hydroxyl group value of 428 mg KOH/g, a number average molecular weight of 600 and a weight average molecular weight of 610.

**Synthetic Example 4:** synthesis of an acrylic suspension stabilizer solution (c)

A reactor equipped with a stirrer, a condenser, a temperature-controlling device, a nitrogen-introducing tube and a dropping funnel was charged with 65 parts of n-butanol. The reactor was substituted in an inside thereof with nitrogen and heated and maintained at 110°C. Dropwise added thereto in 3 hours was a mixture comprising 20 parts of RMA-450M (polyethylene oxide (45 monomer unit polymer) methacrylate, manufactured by Nippon Nyukazai Co., Ltd.), 10 parts of 2-hydroxyethyl acrylate, 20 parts of n-butyl acrylate, 30 parts of styrene, 10 parts of acrylic acid, 10 parts of 2-ethylhexyl acrylate and 2 parts of 2,2'-azobis(2-methylbutyronitrile). After finishing dropwise adding, the solution was aged for 30 minutes, and the mixture of 0.5 part of 2,2'-azobis(2-methylbutyronitrile) and 10 parts of n-butanol was further dropwise added thereto in one hour. Then, the solution was aged for 30 minutes, followed by neutralizing the solution in 0.7 equivalent with dimethylethanolamine and adding thereto deionized water to dilute the solution until the resin concentration became 30 % by weight, whereby an acrylic suspension stabilizer solution (c) was obtained.

**Synthetic Example 5:** synthesis of an acrylic resin aqueous dispersion (d-1)

A reaction vessel was charged with 140 parts of deionized water, 2.5 parts of "Newcol 707SF" (trade name, surfactant, solid content: 30 %, manufactured by Nippon Nyukazai Co., Ltd.) and 80 parts of the following monomer mixture (1). They were stirred and mixed in nitrogen flow, and a monomer emulsion comprising 4 parts of 3 % ammonium persulfate and 42 parts of deionized water was added to the reaction vessel at 60°C in 4 hours by means of a constant flow pump. After finishing addition, the solution was aged for one hour.

| Monomer mixture (1) | |
|---|---|
| Methyl methacrylate | 55 parts |
| Styrene | 10 parts |
| n-Butyl acrylate | 9 parts |
| 2-Hydroxyethyl acrylate | 5 parts |
| Methacrylic acid | 1 part |

Next, the reaction vessel described above was maintained at 80°C in an inside thereof, and 20.5 parts of the following monomer mixture (2) and 4 parts of 3 % ammonium persulfate-aqueous solution were dropwise added to the reaction vessel at the same time in 1.5 hour. After finishing addition, the solution was aged for one hour and then filtered through a nylon cloth of 200 mesh at 30°C. Deionized water was further added thereto, and the pH was controlled to 7.5 with N,N-dimethylaminoethanol, whereby obtained was an acrylic resin aqueous dispersion (d-1) having an average particle diameter of 0.1 µm, a Tg (glass transition temperature) of 46°C and a non-volatile content of 20 %.

| Monomer mixture (2) | |
|---|---|
| Methyl methacrylate | 5 parts |
| n-Butyl acrylate | 7 parts |
| 2-Ethylhexyl acrylate | 5 parts |
| Methacrylic acid | 3 parts |
| "Newcol 707SF" | 0.5 part |

**Synthetic Example 6:** synthesis of an acrylic resin aqueous solution (d-2)

A reaction vessel was charged with 60 parts of ethylene glycol monobutyl ether and 15 parts of isobutyl alcohol and heated to 115°C in nitrogen flow. After the temperature reached 115°C, added in one hour were 26 parts of n-butyl acrylate, 47 parts of methyl methacrylate, 10 parts of styrene, 10 parts of 2-hydroxyethyl methacrylate, 6 parts of acrylic

acid and the mixture of one part of azobisisobutyronitrile and 5 parts of ethylene glycol monobutyl ether. The solution was aged for 30 minutes and then filtered through a nylon cloth of 200 mesh at 50°C to obtain a reaction product solution having a viscosity of Z4 (Gardner bubble viscometer) and a non-volatile content of 55 %. The reaction product (solid matter) had an acid value of 47 mg KOH/g and a Tg of 40°C. The reaction product solution was diluted with N, N-dimethylaminoethanol in an equivalence, and deionized water was further added, whereby an acrylic resin aqueous solution (d-2) having a non-volatile content of 50 % was obtained.

**Example 1**

Mixed were 300 parts of Celoxide 2021P, 3 parts of zinc triflate and 3 parts of propylene glycol monomethyl ether to prepare a curing composition (A-1).

**Examples 2 to 14 and Comparative Examples 1 to 3**

Curing compositions (A-2) to (A-14) and (B-1) to (B-3) were prepared in the same manner as in Example 1, except that components shown in the following Table 1 were used in proportions shown in Table 1.

In Table 1, codes shown below mean the following:

| | |
|---|---|
| $Zn(OTf)_2$ : | zinc triflate |
| $Mg(OTf)_2$ : | magnesium triflate |
| $Yb(OTf)_3$ : | ytterbium triflate |
| $Gd(OTf)_3$ : | gadolinium triflate |
| LiOTf : | lithium triflate |
| AgOTf : | silver triflate |
| 50 % CI-2639 : | slufonium salt base cationic polymerization initiator (active ingredient: 50 %, manufactured by Nippon Soda Co., Ltd.) |

Evaluation of curing property of curing composition

The curing properties of the curing compositions obtained in the respective examples described above were evaluated in the following manner.

The curing composition was applied on a tin plate by means of an applicator so that the cured film thickness was about 45 μm and heated and dried at the respective temperatures of 100°C, 120°C and 140°C for 30 minutes. It was left standing for 24 hours, and then the coating film hardness was measured by means of a Knoop hardness meter. Then, the coating film was separated and extracted in acetone under reflux for 6 hours to determine a gel ratio (%) from the coating film weights before and after extraction according to the following equation:

$$\text{gel ratio (\%)} = \frac{\text{coating film weight after extraction}}{\text{coating film weight before extraction}} \times 100$$

Table 1

| | | Example | | | | | | | | |
|---|---|---|---|---|---|---|---|---|---|---|
| | | 1 | 2 | 3 | 4 | 5 | 6 | 7 | 8 | 9 |
| Kind of curing composition | | A-1 | A-2 | A-3 | A-4 | A-5 | A-6 | A-7 | A-8 | A-9 |
| Celoxide 2021P | | 300 | 300 | 300 | 300 | 300 | 250 | 250 | 250 | 250 |
| Acrylic resin solution (a-1) obtained in Synthetic Example 1 | | | | | | | | | | |
| Acrylic resin solution (a-2) obtained in Synthetic Example 2 | | | | | | | | | | |
| Cardura E-10 | | | | | | | | | | |
| 3-Ethyl-3-hydroxy-methyloxetane | | | | | | | | | | |
| ε-Caprolactone | | | | | | | | | | |
| Zn(OTf)$_2$ | | 3 | 1.5 | | | | 3 | | | |
| Mg(OTf)$_2$ | | | | 3 | | | | 3 | | |
| Yb(OTf)$_3$ | | | | | 3 | | | | 3 | |
| Gd(OTf)$_3$ | | | | | | 3 | | | | 3 |
| LiOPTf | | | | | | | | | | |
| AgOTf | | | | | | | | | | |
| 50%Cl-2639 | | | | | | | | | | |
| Hydroxyl group -containing compound (b) | | | | | | | 50 | 50 | 50 | 50 |
| Propylene glycol monomethyl ether | | 3 | 3 | 3 | 3 | 3 | 3 | 3 | 3 | 3 |
| Gel ratio | 100°C baking | 100 | 100 | 100 | 100 | 100 | 93 | 90 | 94 | 93 |
| | 120°C baking | 99 | 100 | 100 | 99 | 100 | 95 | 93 | 95 | 95 |
| | 140°C baking | 98 | 98 | 99 | 99 | 99 | 96 | 93 | 96 | 95 |
| Knoop hardness | 100°C baking | 35 | 35 | 30 | 36 | 33 | 25 | 22 | 25 | 24 |
| | 120°C baking | 36 | 35 | 34 | 34 | 36 | 30 | 28 | 28 | 30 |
| | 140°C baking | 35 | 36 | 35 | 35 | 36 | 30 | 29 | 29 | 29 |

Table 1 (continued)

| | | Example | | | | | Comparative Example | | |
|---|---|---|---|---|---|---|---|---|---|
| | | 10 | 11 | 12 | 13 | 14 | 1 | 2 | 3 |
| Kind of curing composition | | A-10 | A-11 | A-12 | A-13 | A-14 | B-1 | B-2* | B-3 |
| Celoxide 2021P | | | | 240 | 240 | 240 | 300 | 300 | 300 |
| Acrylic resin solution (a-1) obtained in Synthetic Example 1 | | 300 | | | | | | | |
| Acrylic resin solution (a-2) obtained in Synthetic Example 2 | | | 300 | | | | | | |
| Cardura E-10 | | | | 60 | | | | | |
| 3-Ethyl-3-hydroxy-methyloxetane | | | | | 60 | | | | |
| ε-Caprolactone | | | | | | 60 | | | |
| $Zn(OTf)_2$ | | 3 | 3 | 1.5 | 1.5 | 1.5 | | | |
| $Mg(OTf)_2$ | | | | | | | | | |
| $Yb(OTf)_3$ | | | | | | | | | |
| $Gd(OTf)_3$ | | | | | | | | | |
| LiOTf | | | | | | | 3 | | |
| AgOTf | | | | | | | | 3 | |
| 50%Cl-2639 | | | | | | | | | 6 |
| Hydroxyl group -containing compound (b) | | | | | | | | | |
| Propylene glycol monomethyl ether | | 3 | 3 | 3 | 3 | 3 | 3 | 3 | |
| Gel ratio | 100°C baking | 95 | 96 | 100 | 100 | 99 | 0 | 100 | 0 |
| | 120°C baking | 98 | 99 | 99 | 100 | 99 | 0 | 100 | 0 |
| | 140°C baking | 99 | 100 | 97 | 99 | 99 | 0 | 99 | 0 |
| Knoop hardness | 100°C baking | 18 | 20 | 16 | 17 | 10 | — | 35 | — |
| | 120°C baking | 20 | 22 | 18 | 17 | 12 | — | 35 | — |
| | 140°C baking | 21 | 23 | 19 | 18 | 12 | — | 36 | — |

*: the cured coating film baked at 140°C was colored brown

**Example 15**

Blended were 10 parts of the 30 % acrylic suspension stabilizer solution (c) cobtained in Synthetic Example 4, 37 parts of ion-exchanged water, 100 parts of Celoxide 2021P and 0.5 part of zinc triflate, and they were mixed at 17,000 rpm for 10 minutes by means of a homogenizer, whereby a water-based curing composition having a non-volatile content of about 70 % was obtained.

**Examples 16 to 27**

The respective water-based curing compositions were obtained in the same manner as in Example 15, except that components shown in the following Table 2 were used in proportions shown in Table 2.

**Comparative Example 4**

Zinc borofluoride [$Zn(BF_4)_2$] which was conventional as a cationic polymerization catalyst was used as a curing catalyst to prepare and evaluate a curing composition in the same manners.

In Table 2, codes shown below mean the following:

| | |
|---|---|
| $Zn(OTf)_2$ : | zinc triflate |
| $Mg(OTf)_2$ : | magnesium triflate |
| $Yb(OTf)_3$ : | ytterbium triflate |
| $Gd(OTf)_3$ : | gadolinium triflate |
| Newcol 504(25) : | trade name, 25 % aqueous solution of polyoxyethylene nonylphenyl ether, manufactured by Nippon Nyukazai Co., Ltd. |
| Newcol 562SF : | trade name, 60 % solution of polyoxyethylene nonylphenyl ether sulfuric acid ester ammonium salt, manufactured by Nippon Nyukazai Co., Ltd. |

The respective water-based curing compositions obtained in Examples 15 to 27 and Comparative Example 4 each described above were tested for a curing property, a coating film hardness and coloring of the coating films based on the following test methods.

The test results thereof are shown in the following Table 2.

Test methods

Curing property: the curing composition was applied on a tin plate by means of an applicator so that the thickness was about 45 μm and heated and dried at the respective temperatures of 100°C, 120°C and 140°C for 30 minutes. It was left standing for 24 hours, and then the coating film was separated and extracted in acetone under reflux for 6 hours to determine a gel ratio (%) from the coating film weights before and after extraction according to the following equation:

$$\text{gel ratio (\%)} = \frac{\text{coating film weight after extraction}}{\text{coating film weight before extraction}} \times 100$$

Coating film hardness: the curing composition was applied on a tin plate by means of an applicator so that the cured film thickness was about 45 μm and heated and dried at 140°C for 30 minutes to obtain a coated test plate. It was left standing for 24 hours, and then a Knoop hardness of the coating film surface on the coated test plate was measured in a room of 20°C.

Coloring of the coating film: a coloring degree of the coating film on the coated test plate used for evaluating the coating film hardness described above was visually evaluated. In the table, the term "none" shows that coloring is not observed and is good, and the term "brown" shows that the coating film is colored brown and coloring is inferior.

Table 2

| | | Example | | | | | | |
|---|---|---|---|---|---|---|---|---|
| | | 15 | 16 | 17 | 18 | 19 | 20 | 21 |
| Kind of curing composition | | A-15 | A-16 | A-17 | A-18 | A-19 | A-20 | A-21 |
| Celoxide 2021P | | 100 | 100 | 100 | 100 | 100 | 100 | 100 |
| Acrylic resin solution (a-1) obtained in Synthetic Example 1 | | | | | | | | |
| Acrylic resin solution (a-2) obtained in Synthetic Example 2 | | | | | | | | |
| Cardura E-10 | | | | | | | | |
| 3-Ethyl-3-hydroxy-methyloxetane | | | | | | | | |
| ε-Caprolactone | | | | | | | | |
| $Zn(OTf)_2$ | | 0.5 | 1.0 | 0.2 | | | | |
| $Mg(OTf)_2$ | | | | | 0.5 | | | |
| $Yb(OTf)_3$ | | | | | | 0.5 | 1.0 | 0.2 |
| $Gd(OTf)_3$ | | | | | | | | |
| $Zn(BF_4)_2$ | | | | | | | | |
| Acrylic suspension stabilizer solution (c) | | 10 | 10 | 10 | 10 | 10 | 10 | 10 |
| Newcol 504(25) | | | 4 | | | | | |
| Newcol 562SF | | | | | | | | |
| Deionized water | | 37 | 35 | 37 | 37 | 37 | 62 | 37 |
| Gel ratio | 100°C baking | 75 | 100 | 0 | 0 | 80 | 100 | 0 |
| | 120°C baking | 100 | 100 | 97 | 91 | 100 | 100 | 90 |
| | 140°C baking | 100 | 99 | 100 | 98 | 100 | 100 | 100 |
| Coating film hardness (KHN) | | 35 | 36 | 34 | 35 | 35 | 36 | 34 |
| Coloring of coating film | | None | None | None | None | None | None | None |

Table 2 (continued)

| | | Example | | | | | | Comparative Exmple |
|---|---|---|---|---|---|---|---|---|
| | | 22 | 23 | 24 | 25 | 26 | 27 | 4 |
| Kind of curing composition | | A-22 | A-23 | A-24 | A-25 | A-26 | A-27 | B-4 |
| Celoxide 2021P | | 100 | | | 80 | 80 | 80 | 100 |
| Acrylic resin Solution (a-1) obtained in Synthetic Example 1 | | | 100 | | | | | |
| Acrylic resin solution (a-2) obtained in Synthetic Example 2 | | | | 100 | | | | |
| Cardura E-10 | | | | | 20 | | | |
| 3-Ethyl-3-hydroxy-methyloxetane | | | | | | 20 | | |
| ε-Caprolactone | | | | | | | 20 | |
| $Zn(OTf)_2$ | | | 0.5 | 0.5 | 0.5 | 0.5 | 0.5 | |
| $Mg(OTf)_2$ | | | | | | | | |
| $Yb(OTf)_3$ | | | | | | | | |
| $Gd(OTf)_3$ | | 0.5 | | | | | | |
| $Zn(BF_4)_2$ | | | | | | | | 1.0 |
| Acrylic suspension stabilizer solution(c) | | 10 | 10 | 10 | 10 | 10 | 10 | 10 |
| Newcol 504(25) | | | | | | | | |
| Newcol 562SF | | 1 | | | | | | |
| Deionized water | | 36 | 37 | 37 | 37 | 37 | 37 | 37 |
| Gel ratio | 100°C baking | 78 | 90 | 90 | 70 | 82 | 72 | 0 |
| | 120°C baking | 99 | 95 | 96 | 97 | 96 | 98 | 0 |
| | 140°C baking | 100 | 98 | 99 | 99 | 98 | 98 | 0 |
| Coating film hardness (KHN) | | 35 | 20 | 23 | 18 | 17 | 12 | — |
| Coloring of coating film | | None | None | None | None | None | None | None |

Wet-on-wet coating on water-based colored base coat

**Preparation Example 1:** preparation of coating composition for water-based colored base coat

Mixed were 275 parts of the acrylic resin aqueous dispersion (d-1) having a non-volatile content of 20 % obtained in Synthetic Example 5 described above, 40 parts of the acrylic resin aqueous solution (d-2) having a non-volatile content of 50 % obtained in Synthetic Example 6 described above, 25 parts of "Cymel 350" (trade name, melamine resin, manufactured by Mitsui Cytec Co., Ltd.), 20 parts of "Aluminum Paste AW-500B" (trade name, paste of aluminum powder which is a metallic pigment, manufactured by Asahi Kasei Metals Co., Ltd.), 20 parts of ethylene glycol monobutyl ether and 253 parts of deionized water. Then, added thereto was "Thixol K-130B" (trade name, anti-sagging agent, manufactured by Kyoeisha Chemical Co., Ltd.) to control the viscosity so that it was 300 mPa·s (millipascal·second) with a B type viscometer (rotation speed of rotor: 6 rpm), whereby obtained was a coating composition (C-1) for a water-based colored base coat having a non-volatile content of 19 %.

**Examples 28 to 54 and Comparative Examples 5 to 8**

An epoxy base cationically electrodepositable coating composition was electrodepositablly applied on a dull steel plate having a thickness of 0.8 mm which was subjected to zinc phosphate chemical conversion treatment so that the dried coating film thickness was 20 µm. The coating film was baked at 170°C for 20 minutes and then rubbed with a sand paper of #400, and it was wiped with petroleum benzine for degreasing. Then, an intermediate coating surfacer for automobiles was applied thereon by means of an air spray so that the dried film thickness was about 25 µm, and it was baked at 140°C for 30 minutes and then wet-rubbed with a sand paper of #400. It was drained and dried, followed by wiping with petroleum benzine for degreasing, whereby a material for testing was prepared.

Then, the coating composition (C-1) for a water-based colored base coat obtained in Preparation Example 1 described above was applied on this material so that the film thickness was 20 µm, and it was dried (semi-cured) at 80°C for 5 minutes. Then, the respective curing compositions prepared in the respective examples and comparative Examples described above which were controlled in a viscosity (viscosity: 30 seconds/Ford cup #4/20°C) were applied on the coated face thereof by wet-on-wet so that the film thickness was 40 µm in terms of a cured coating film thickness, and both coating films were cured by heating at 140°C for 30 minutes.

The coated test plates thus obtained were evaluated for a finish, coloring of the coating films and a coating film hardness according to the following criteria.

Finish: visually judged according to the following criteria.
○: smoothness, gloss and sharpness are good, and nothing abnormal is observed
Δ: any of smoothness, gloss and sharpness is a little inferior
X : any of smoothness, gloss and sharpness is markedly inferior

Coloring of the coating films: a coloring degree of the coating film was visually evaluated. In the following Tables 3 and 4, the term "none" shows that coloring is not observed and is good, and the term "brown" shows that the coating film is colored brown and coloring is inferior.

Coating film hardness: a Knoop hardness (20°C) of the coated face on the coated test plate was measured.

Table 3

| | Example | | | | | | | | |
|---|---|---|---|---|---|---|---|---|---|
| | 28 | 29 | 30 | 31 | 32 | 33 | 34 | 35 | 36 |
| Kind of curring composition | A-1 | A-2 | A-3 | A-4 | A-5 | A-6 | A-7 | A-8 | A-9 |
| Finish | O | O | O | O | O | O | O | O | O |
| Coloring | None | None | None | None | None | None | None | None | None |
| Knoop hardness | 25 | 25 | 26 | 24 | 26 | 20 | 19 | 18 | 19 |

Table 3 (continued)

| | Example | | | | | Comparative Example | | |
|---|---|---|---|---|---|---|---|---|
| | 37 | 38 | 39 | 40 | 41 | 5 | 6 | 7 |
| Kind of curring composition | A-10 | A-11 | A-12 | A-13 | A-14 | B-1 | B-2 | B-3 |
| Finish | O | O | O | O | O | Uncured | O | Uncured |
| Coloring | None | None | None | None | None | None | Brown | None |
| Knoop hardness | 10 | 14 | 9 | 7 | 5 | — | 26 | — |

Table 4

| | Example | | | | | | |
|---|---|---|---|---|---|---|---|
| | 42 | 43 | 44 | 45 | 46 | 47 | 48 |
| Kind of curring composition | A-15 | A-16 | A-17 | A-18 | A-19 | A-20 | A-21 |
| Finish | O | O | O | O | O | O | O |
| Coloring | None | None | None | None | None | None | None |
| Knoop hardness | 25 | 24 | 24 | 23 | 26 | 26 | 24 |

Table 4 (continued)

| | Example | | | | | | Comparative Example |
|---|---|---|---|---|---|---|---|
| | 49 | 50 | 51 | 52 | 53 | 54 | 8 |
| Kind of curring composition | A-22 | A-23 | A-24 | A-25 | A-26 | A-27 | B-4 |
| Finish | O | O | O | O | O | O | Uncured |
| Coloring | None | None | None | None | None | None | None |
| Knoop hardness | 25 | 10 | 15 | 9 | 8 | 5 | — |

As can be found from the examples described above, the curing composition of the present invention is a water-containing curing composition which is not colored in baking and can form a three-dimensionally cross-linked matter excellent in characteristics such as a hardness and a finish, and it is very useful for a water-based coating composition. According to the production method for a cured coating film of the present invention, a coating film which is not colored in baking and has good characteristics such as a hardness and a finish is obtained as well in coating by wet-on-wet.

## Claims

1. A curing composition comprising:

   (A) a polymerizable cyclic structure-containing component comprising
   a compound (a-1) having at least two polymerizable cyclic ether structures in a molecule and, if necessary,
   a compound (a-2) having one polymerizable cyclic structure in a molecule,
   (B) 0.01 to 5 parts by weight, per 100 parts by weight of the above component (A), of a metal triflate, and
   (C) water,

   the above polymerizable cyclic structure-containing component (A) having an average polymerizable cyclic structure equivalent (number average molecular weight/number of polymerizable cyclic structure in a molecule) falling in a range of 100 to 1000, and the metal triflate (B) being triflate of metal selected from scandium, yttrium, lanthanoid series metals, actinoid series metals, magnesium and zinc.

2. The curing composition as described in claim 1, wherein the compound (a-1) is a compound having an oxirane ring and/or an oxetane ring.

3. The curing composition as described in claim 2, wherein the compound having an oxirane ring is selected from the group consisting of (3,4-epoxycyclohexyl)methyl-3,4-epoxycyclohexanecarboxylate, bis(3,4-epoxycyclohexylmethyl) adipate, bis(3,4-epoxycyclohexylmethyl) ether of ethylene glycol, Epolead GT300, Epolead GT400, compounds represented by the following formula (2):

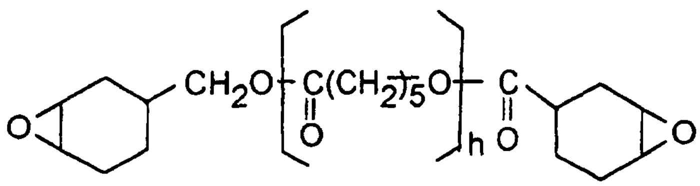

(2)

(h is an integer of 1 or more)

and the homopolymers or copolymers of 3,4-epoxycyclohexylmethyl (meth)acrylate or the caprolactone-modified compound of 3,4-epoxycyclohexylmethyl (meth)acrylate.

4. The curing composition as described in claim 2, wherein the compound having an oxetane ring is a compound represented by the following formula (5):

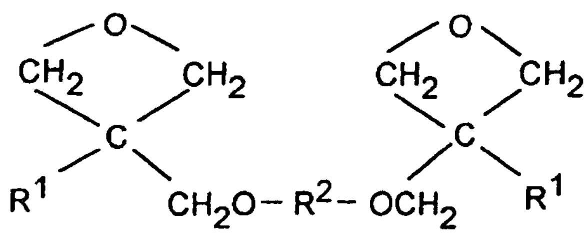

(5)

wherein two $R^1$'s may be the same or different and represent a hydrogen atom or an alkyl group having 1 to 4 carbon atoms; and $R^2$ represents an alkylene group having 1 to 6 carbon atoms, a cycloalkylene group having 4 to 7 carbon atoms, a phenylene group, a xylylene group, a hydrogenated xylylene group or a polyalkyleneoxy group having 4 to 30 carbon atoms.

5. The curing composition as described in claim 2, wherein the compound having an oxirane ring and oxetane ring is 3-ethyl-3-(3,4-epoxycyclohexylmethyl)-oxymethyloxetane or 3-ethyl-3-glycidyloxymethyloxetane.

6. The curing composition as described in claim 1, wherein the compound (a-1) is an oxirane compound having 2 to 50 alicyclic epoxy groups in a molecule.

7. The curing composition as described in claim 1, wherein the compound (a-1) has a number average molecular weight falling in a range of 140 to 50,000.

8. The curing composition as described in claim 1, wherein the compound (a-1) has a polymerizable cyclic ether structure equivalent (number average molecular weight/number of polymerizable cyclic ether structure in a molecule) falling in a range of 70 to 3,000.

9. The curing composition as described in claim 1, wherein the polymerizable cyclic structure in the compound (a-2) is a cyclic ether structure, a cyclic ester structure, a cyclic amide structure or a cyclic iminoether structure.

10. The curing composition as described in claim 1, wherein the compound (a-2) has a number average molecular weight falling in a range of 70 to 1,000.

11. The curing composition as described in claim 1, wherein the compound (a-2) is selected from the group consisting of oxiranes, oxetanes, oxolanes and lactones.

12. The curing composition as described in claim 1, wherein the polymerizable cyclic structure-containing component

(A) has an average polymerizable cyclic structure equivalent falling in a range of 120 to 700.

**13.** The curing composition as described in claim 1, wherein the polymerizable cyclic structure-containing component (A) comprises the compound (a-1) of 20 to 100 parts by weight and the compound (a-2) of 0 to 80 parts by weight each per 100 parts by weight of the total of the compound (a-1) and the compound (a-2).

**14.** The curing composition as described in claim 1, wherein the polymerizable cyclic structure-containing component (A) comprises the compound (a-1) of 40 to 100 parts by weight and the compound (a-2) of 0 to 60 parts by weight each per 100 parts by weight of the total of the compound (a-1) and the compound (a-2).

**15.** The curing composition as described in claim 1, wherein the metal triflate (B) is zinc triflate.

**16.** The curing composition as described in claim 1, comprising the metal triflate (B) of 0.01 to 2 parts by weight per 100 parts by weight of the polymerizable cyclic structure-containing component (A).

**17.** The curing composition as described in claim 1, comprising water of 0.1 to 250 parts by weight per 100 parts by weight of the polymerizable cyclic structure-containing component (A).

**18.** The curing composition as described in claim 1, wherein the polymerizable cyclic structure-containing component (A) is dispersed in water.

**19.** A method for forming a cured coating film, comprising applying the curing composition as described in claims 1 to 18 and curing it by heating.

**20.** A method for forming a cured coating film, comprising applying the curing composition as described in claims 1 to 18 on an uncured thermosetting colored layer and then curing it by heating.

**21.** The method as described in claim 20, wherein the colored layer is formed by applying a water-based color coating composition.

**22.** The method as described in claim 20, wherein the colored layer is formed on a car body.

**23.** The method as described in claim 20, wherein the curing composition as described in claims 1 to 18 is used for a coating composition.

**24.** A cured coating film formed from the curing composition as described in claims 1 to 18.

**25.** A coated article obtained by using the curing composition as described in claims 1 to 18.

## Patentansprüche

**1.** Härtungszusammensetzung, umfassend:

(A) eine polymerisierbare Ringstruktur-enthaltende Komponente, umfassend
eine Verbindung (a-1) mit mindestens zwei polymerisierbaren Ether-Ringstrukturen in einem Molekül und, gegebenenfalls,
eine Verbindung (a-2) mit einer polymerisierbaren Ringstruktur in einem Molekül,
(B) 0,01 bis 5 Gew.-Teile pro 100 Gew.-Teile der vorstehenden Komponente (A), eines Metalltriflates, und
(C) Wasser,

wobei die vorstehende polymerisierbare Ringstruktur-enthaltende Komponente (A) ein durchschnittliches polymerisierbares Ringstruktur-Äquivalent (Zahlenmittel des Molekulargewichts/Anzahl der polymerisierbaren Ringstrukturen in einem Molekül) in einem Bereich von 100 bis 1000 aufweist, und das Metalltriflat (B) ein Triflat eines Metalles, ausgewählt aus Scandium, Yttrium, Lanthanoid-Metallen, Actinoid-Metallen, Magnesium und Zink, ist.

**2.** Härtungszusammensetzung nach Anspruch 1, wobei die Verbindung (a-1) eine Verbindung mit einem Oxiranring

und/oder einem Oxetanring ist.

3. Härtungszusammensetzung nach Anspruch 2, wobei die Verbindung mit einem Oxiranring ausgewählt ist aus der Gruppe, bestehend aus (3,4-Epoxycyclohexyl)methyl-3,4-epoxycyclohexancarboxylat, Bis(3,4-epoxycyclohexylmethyl)-adipat, Bis(3,4-epoxycyclohexylmethyl)ether des Ethylenglykols, Epolead GT300, Epolead GT400, Verbindungen der nachstehenden Formel (2):

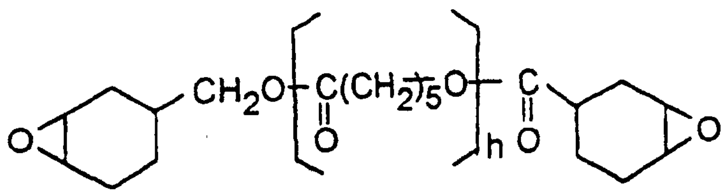

(2)

(h ist eine ganze Zahl größer oder gleich 1)

und den Homopolymeren oder Copolymeren von 3,4-Epoxycyclohexylmethyl(meth)acrylat oder der Caprolactonmodifizierten Verbindung von 3,4-Epoxycyclohexylmethyl(meth)acrylat.

4. Härtungszusammensetzung nach Anspruch 2, wobei die Verbindung mit einem Oxetanring eine Verbindung der nachstehenden allgemeinen Formel (5) ist:

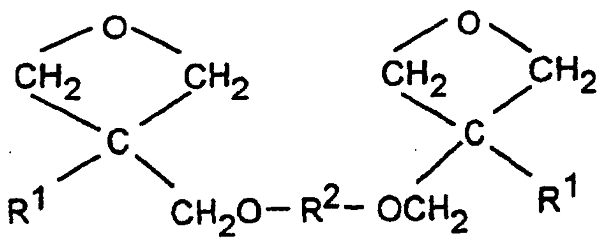

(5)

worin die beiden Reste $R^{1'}$ gleich oder verschieden sein können und ein Wasserstoffatom oder eine Alkylgruppe mit 1 bis 4 Kohlenstoffatomen darstellen, und $R^2$ eine Alkylengruppe mit 1 bis 6 Kohlenstoffatomen, eine Cycloalkylengruppe mit 4 bis 7 Kohlenstoffatomen, eine Phenylengruppe, eine Xylylengruppe, eine hydrierte Xylylengruppe oder eine Polyalkylenoxygruppe mit 4 bis 30 Kohlenstoffatomen darstellt.

5. Härtungszusammensetzung nach Anspruch 2, wobei die Verbindung mit einem Oxiranring und Oxetanring 3-Ethyl-3-(3,4-epoxycyclohexylmethyl)oxymethyloxetan oder 3-Ethyl-3-glycidyloxymethyloxetan ist.

6. Härtungszusammensetzung nach Anspruch 1, wobei die Verbindung (a-1) eine Oxiranverbindung mit 2 bis 50 alicyclischen Epoxygruppen in einem Molekül ist.

7. Härtungszusammensetzung nach Anspruch 1, wobei die Verbindung (a-1) ein Zahlenmittel des Molekulargewichts im Bereich von 140 bis 50.000 aufweist.

8. Härtungszusammensetzung nach Anspruch 1, wobei die Verbindung (a-1) ein polymerisierbares Ether-Ringstruktur-Äquivalent (Zahlenmittel des Molekulargewichts/Anzahl der polymerisierbaren Ether-Ringstrukturen in einem Molekül) im Bereich von 70 bis 3000 aufweist.

9. Härtungszusammensetzung nach Anspruch 1, wobei die polymerisierbare Ringstruktur in der Verbindung (a-2) eine Ether-Ringstruktur, Ester-Ringstruktur, Amid-Ringstruktur oder eine Iminoether-Ringstruktur ist.

10. Härtungszusammensetzung nach Anspruch 1, wobei die Verbindung (a-2) ein Zahlenmittel des Molekulargewichts im Bereich von 70 bis 1000 aufweist.

11. Härtungszusammensetzung nach Anspruch 1, wobei die Verbindung (a-2) ausgewählt ist aus der Gruppe bestehend aus Oxiranen, Oxetanen, Oxolanen und Lactonen.

**12.** Härtungszusammensetzung nach Anspruch 1, wobei die polymerisierbare Ringstruktur-enthaltende Komponente (A) ein durchschnittliches polymerisierbares Ringstruktur-Äquivalent in einem Bereich von 120 bis 700 aufweist.

**13.** Härtungszusammensetzung nach Anspruch 1, wobei die polymerisierbare Ringstruktur-enthaltende Komponente (A) 20 bis 100 Gew.-Teile der Verbindung (a-1) und 0 bis 80 Gew.-Teile der Verbindung (a-2), jeweils bezogen auf 100 Gew.-Teile der Verbindung (a-1) und der Verbindung (a-2) insgesamt, umfasst.

**14.** Härtungszusammensetzung nach Anspruch 1, wobei die polymerisierbare Ringstruktur-enthaltende Komponente (A) 40 bis 100 Gew.-Teile der Verbindung (a-1) und 0 bis 60 Gew.-Teile der Verbindung (a-2), jeweils bezogen auf 100 Gew.-Teile der Verbindung (a-1) und der Verbindung (a-2) insgesamt, umfasst.

**15.** Härtungszusammensetzung nach Anspruch 1, wobei das Metalltriflat (B) Zinktriflat ist.

**16.** Härtungszusammensetzung nach Anspruch 1, umfassend 0,01 bis 2 Gew.-Teile des Metalltriflats (B) pro 100 Gew. -Teile der polymerisierbaren Ringstruktur-enthaltenden Komponente (A) .

**17.** Härtungszusammensetzung nach Anspruch 1, umfassend 0,1 bis 250 Gew.-Teile Wasser pro 100 Gew.-Teile der polymerisierbaren Ringstruktur-enthaltenden Komponente (A).

**18.** Härtungszusammensetzung nach Anspruch 1, wobei die polymerisierbare Ringstruktur-enthaltende Komponente (A) in Wasser dispergiert ist.

**19.** Verfahren zur Bildung eines gehärteten Beschichtungsfilms, umfassend das Auftragen der in den Ansprüchen 1 bis 18 beschriebenen Härtungszusammensetzung und Härten derselben durch Erhitzen.

**20.** Verfahren zur Bildung eines gehärteten Beschichtungsfilms, umfassend das Auftragen der in den Ansprüchen 1 bis 18 beschriebenen Härtungszusammensetzung auf eine ungehärtete, wärmehärtbare, gefärbte Schicht und anschließendes Härten derselben durch Erhitzen.

**21.** Verfahren nach Anspruch 20, wobei die gefärbte Schicht gebildet wird durch Auftragen einer Farbbeschichtungszusammensetzung auf Wasserbasis.

**22.** Verfahren nach Anspruch 20, wobei die gefärbte Schicht auf einer Kraftfahrzeugkarosserie gebildet wird.

**23.** Verfahren nach Anspruch 20, wobei die in den Ansprüchen 1 bis 18 beschriebene Härtungszusammensetzung für eine Beschichtungszusammensetzung verwendet wird.

**24.** Gehärteter Beschichtungsfilm, gebildet aus der in den Ansprüchen 1 bis 18 beschriebenen Härtungszusammensetzung.

**25.** Beschichteter Gegenstand, erhalten unter Verwendung der in den Ansprüchen 1 bis 18 beschriebenen Härtungszusammensetzung.

## Revendications

**1.** Composition durcissable comprenant :

(A) un composant contenant des structures cycliques polymérisables comprenant
un composé (a-1) ayant au moins deux structures d'éther cyclique polymérisables dans une molécule et, si nécessaire,
un composé (A-2) ayant une structure cyclique polymérisable dans une molécule,
(B) 0,01 à 5 parties en poids, pour 100 parties en poids du composant (A) ci-dessus, d'un trifluorométhanesulfonate de métal, et
(C) de l'eau,

le composant (A) contenant des structures cycliques polymérisables ci-dessus ayant un équivalent moyen de structure polymérisable (poids moléculaire moyen en nombre/nombre de structures cycliques polymérisables dans une molécule) compris dans un intervalle de 100 à 1000, et le trifluorométhanesulfonate de métal (B) étant un trifluorométhanesulfonate d'un métal choisi parmi le scandium, l'yttrium, les métaux de la série des lanthanides, les métaux de la série des actinides, le magnésium et le zinc.

**2.** Composition durcissable selon la revendication 1, dans laquelle le composé (a-1) est un composé ayant un cycle d'oxiranne et/ou un cycle d'oxétanne.

**3.** Composition durcissable selon la revendication 2, dans laquelle le composé ayant un cycle d'oxiranne est choisi dans la classe formée par le 3,4-époxycyclohexane-carboxylate de (3,4-époxycyclohexyl)méthyle, l'adipate de bis (3,4-époxycyclohexylméthyle), l'éther bis(3,4-époxycyclohexylméthylique) d'éthylène-glycol, Epolead GT300, Epolead GT400, les composés représentés par la formule (2) suivante :

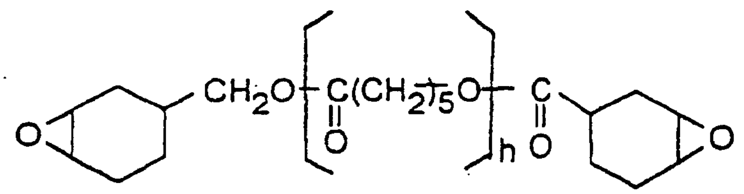

(2)

(h est un nombre entier égal ou supérieur à 1)

et les homopolymères ou copolymères de (méth)acrylate de 3,4-époxycyclohexylméthyle ou du composé modifié par la caprolactone de (méth)acrylate de 3,4-époxycyclohexylméthyle.

**4.** Composition durcissable selon la revendication 2, dans laquelle le composé ayant un cycle d'oxétanne est un composé représenté par la formule (5) suivante :

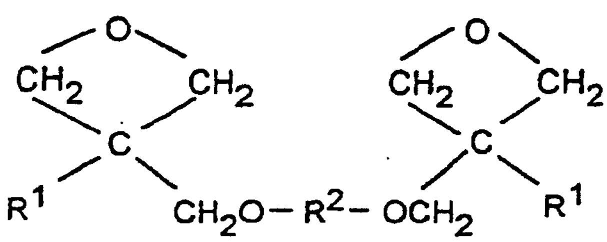

(5)

dans laquelle les deux $R^1$ peuvent être identiques ou différents et représentent chacun un atome d'hydrogène ou un groupe alkyle ayant 1 à 4 atomes de carbone ; et $R^2$ représente un groupe alkylène ayant 1 à 6 atomes de carbone, un groupe cycloalkylène ayant 4 à 7 atomes de carbone, un groupe phénylène, un groupe xylylène, un groupe xylylène hydrogéné ou un groupe polyoxyalkylène ayant 4 à 30 atomes de carbone.

**5.** Composition durcissable selon la revendication 2, dans laquelle le composé ayant un cycle d'oxiranne et un cycle d'oxétanne est le 3-éthyl-3-(3,4-époxycyclohexylméthyl)oxyméthyloxétanne ou le 3-éthyl-3-glycidyloxyméthyloxétanne.

**6.** Composition durcissable selon la revendication 1, dans laquelle le composé (a-1) est un composé à cycles d'oxiranne ayant 2 à 50 groupes époxy alicycliques dans une molécule.

**7.** Composition durcissable selon la revendication 1, dans laquelle le composé (a-1) a un poids moléculaire moyen en nombre compris dans un intervalle de 140 à 50 000.

**8.** Composition durcissable selon la revendication 1, dans laquelle le composé (a-1) a un équivalent de structure d'éther cyclique polymérisable (poids moléculaire moyen en nombre/nombre de structures d'éther cyclique polymérisables dans une molécule) compris dans un intervalle de 70 à 3000.

9. Composition durcissable selon la revendication 1, dans laquelle la structure cyclique polymérisable contenue dans le composé (a-2) est une structure d'éther cyclique, une structure d'ester cyclique, une structure d'amide cyclique ou une structure d'iminoéther cyclique.

10. Composition durcissable selon la revendication 1, dans laquelle le composé (a-2) a un poids moléculaire moyen en nombre compris dans un intervalle de 70 à 1000.

11. Composition durcissable selon la revendication 1, dans laquelle le composé (a-2) est choisi dans la classe formée par les oxirannes, les oxétannes, les oxolannes et les lactones.

12. Composition durcissable selon la revendication 1, dans laquelle le composant (A) contenant des structures cycliques polymérisables a un équivalent moyen de structure cyclique polymérisable compris dans un intervalle de 120 à 700.

13. Composition durcissable selon la revendication 1, dans laquelle le composant (A) contenant des structures cycliques polymérisables comprend 20 à 100 parties en poids du composé (a-1) et 0 à 80 parties en poids du composé (a-2), chacun pour 100 parties en poids du total du composé (a-1) et du composé (a-2).

14. Composition durcissable selon la revendication 1, dans laquelle le composant (A) contenant des structures cycliques polymérisables comprend 40 à 100 parties en poids du composé (a-1) et 0 à 60 parties en poids du composé (a-2), chacun pour 100 parties en poids du total du composé (a-1) et du composé (a-2).

15. Composition durcissable selon la revendication 1, dans laquelle le trifluorométhanesulfonate de métal (B) est le trifluorométhanesulfonate de zinc.

16. Composition durcissable selon la revendication 1, comprenant 0,01 à 2 parties en poids du trifluorométhanesulfonate de métal (B) pour 100 parties en poids du composant (A) contenant des structures cycliques polymérisables.

17. Composition durcissable selon la revendication 1, comprenant 0,1 à 250 parties en poids d'eau pour 100 parties en poids du composant (A) contenant des structures cycliques polymérisables.

18. Composition durcissable selon la revendication 1, dans laquelle le composant (A) contenant des structures cycliques polymérisables est dispersé dans l'eau.

19. Procédé de formation d'un film de revêtement durci, comprenant l'application de la composition durcissable selon les revendications 1 à 18 et son durcissement par chauffage.

20. Procédé de formation d'un film de revêtement durci, comprenant l'application de la composition durcissable selon les revendications 1 à 18 sur une couche colorée thermodurcissable non durcie, puis son durcissement par chauffage.

21. Procédé selon la revendication 20, dans lequel la couche colorée est formée en appliquant une composition de revêtement colorée à base aqueuse.

22. Procédé selon la revendication 20, dans lequel la couche colorée est formée sur une carrosserie d'automobile.

23. Procédé selon la revendication 20, dans lequel la composition durcissable selon les revendications 1 à 18 est utilisée pour une composition de revêtement.

24. Film de revêtement durci formé à partir de la composition durcissable selon les revendications 1 à 18.

25. Article revêtu obtenu en utilisant la composition durcissable selon les revendications 1 à 18.